# EUROPÄISCHE PATENTSCHRIFT

(11) **EP 1 461 988 B1**
(45) Veröffentlichungstag und Bekanntmachung des Hinweises auf die Patenterteilung: **25.04.2012**
(21) Anmeldenummer: 04006646.6
(22) Anmeldetag: 19.03.2004
(51) Int. Cl.: A01C 5/06

(54) **Sämaschine mit verbesserter Saatgutandruckrolle**
Planter with improved firming wheel
Semoir à roue plombeuse améliorée

(30) Priorität: 25.03.2003 DE 10313181
(43) Veröffentlichungstag der Anmeldung: 29.09.2004
(73) Patentinhaber: Amazonen-Werke H. Dreyer GmbH & Co. KG, 49205 Hasbergen (DE)
(72) Erfinder: Stiegemeyer, Mathias, 49504 Lotte (DE); Johannaber, Stefan, 49536 Lienen (DE)

(56) Entgegenhaltungen:
- US-A- 3 181 622
- US-A- 4 307 674
- US-A- 5 676 429
- US-A1- 2002 174 813
- US-B1- 6 295 939

## Beschreibung

Die Erfindung betrifft eine Sämaschine gemäß des Oberbegriffes des Patentanspruches 1.

Eine derartige Sämaschine ist beispielsweise durch die EP 0 031 241 B1 bekannt. Bei diesen Sämaschinen ist hinter den einen Saatgutzuführungskanal aufweisenden Säscharen jeweils eine Saatandruckrolle angeordnet. Diese Saatandruckrolle ist höhenunverstellbar an dem Säschar befestigt. Die Unterkante der Laufflächenrollen ist höher als die Unterkante der Schare angeordnet, so dass über den druckluftbeaufschlagten Saatzuführungskanal das Saatgut in dem von der Säfurche und der Lauffläche gebildeten Keil geschleudert werden kann und von der Saatandruckrolle abgebremst bzw. abgefangen wird. Die Lauffläche der Saatandruckrolle ist ein glatter Stahlmantel, der auf einem Tragkörper angeordnet ist. Die Rolle kann über einen Fremdantrieb mit einer Umfangsgeschwindigkeit angetrieben werden, die ein bis zwei Prozent größer als die Vorschubgeschwindigkeit der Sämaschine ist.

Eine Sämaschine ähnlicher Bauart ist durch die EP 0 404 241 B1 bekannt. Hinter dem Säschar dieser Sämaschine ist ebenfalls höhenunverstellbar eine aus einen undeformierbaren Material bestehende Saatandruckrolle drehbar gelagert. Die Rolle ist so angeordnet, dass die Aufstandsfläche dieser Saatandruckrolle ist etwas höher, als die Unterkante des Säschares beindet. Bei einer nach diesem Patent verwirklichten Sämaschine der Firma Kongskilde weist die Saatandruckrolle eine auf einem Kunststoffkörper angeordneten Stahlring auf, der die Lauffläche der Saatandruckrolle bildet. Die Saatandruckrolle wird über einen Kettenträger von auf dem Boden abrollenden Laufrädern der Sämaschine zwangsweise angetrieben. Die auf der Lauffläche dieser aus Stahl bestehenden Saatandruckrolle anhaftenden Bodenteile müssen mittels eines Abstreifers abgestreift werden.

Eine weitere Sämaschine mit den Merkmalen des Oberbegriffs des Anspruchs 1 ist aus der US 2002/0174813 bekannt.

Der Erfindung liegt die Aufgabe zugrunde, eine einfach ausgestelteteSaatandruckrolle ohne die Nachteile des Standes der Technik zu schaffen.

Diese Aufgabe wird erfindungsgemäß durch die kennzeichnenden Merkmale des Patentanspruches 1 gelöst. Infolge dieser Maßnahmen wird in überraschend einfacher Weise eine Saatandruckrolle geschaffen, welche sich selbst reinigt und eine gleichmäßige Abrollbewegung auf dem Boden ohne Fremdantrieb gewährleistet und sich gleichzeitig sich dazu eignet von in Richtung der Saatabdruckrolle mittels Druckluft geschleuderten Saatkörner abzubremsen und in die Säfurche zu drücken. Durch die völlig elastische Ausbildung hat die erfindungsgemäße Saatandruckrolle Voraussetzunge eine bisher nicht gekannte Betriebssicherheit mit einer präzisen Ablage der ihr durch den Saatzuführkanal zugeführten Saatkörner im Boden. Die Ausgestaltung der Rolle gewährleistet einen gleichmäßigen Eigenantrieb. Eine gute Selbstreinigung und eine gute Saatgutablage wird dadurch erreicht, dass die Seitenflanken derart ausgebildet sind, dass sie bei einem Druck auf die Lauffläche des reifenartigen Elementes sich nach außen wölben.

Um den sicheren Eigenantrieb, die gewünschte Walkarbeit mit einer Selbstreinigung und einer guten Einbettung des Sattgutes in die Säfurche zu erreichen, ist vorgesehen dass das Breiten- Höhenverhältnis von Lauffläche zu Seitenflanke mindestens 1 : 2, vorzugsweise 1: > 3 beträgt.

Eine einfache Ausbildung der Saatandruckrolle ergibt sich dadurch, dass das reifenartige Element einen U-förmigen Querschnitt aufweist, wobei der die beiden Seitenflanken verbindende Quersteg die Lauffläche der Rolle bildet.

Dadurch, dass die Seitenflanken als nach außen wölbbare Seitenflanken ausgebildet sind, ergibt sich eine gute Selbstreinigung und eine Abdichtung zwischen Schar und Saatandruckrolle während der Arbeit.

Eine einfache und vorteilhafte Anordnung des reifenartigen Elementes ergibt sich dadurch, dass die reifenartigen Elemente derart auf den Felgen angeordnet sind, dass bei einem auftreten der Kraft auf die Lauffläche in Achsrichtung sich die Seitenflanken nach außen wölben.

Eine gute Walkung des reifenartigen Elementes lässt sich dadurch erreichen, dass die Seitenflanken derart ausgebildet und oder auf den Felgen derart angeordnet sind, dass sie eine Tendenz zum nach außen wölben aufweisen.

Um sicher zu stellen, dass die Seitenflanken sich nach außen wölben, ist in einer Ausführung vorgesehen, dass die Seitenflanken im Querschnitt gesehen nach außen gewölbt ausgebildet sind.

Ebenfalls lässt sich eine sichere nach Außenwölbung der Seitenflanken in einer Ausführungsform dadurch erreichen, dass die scheibenartigen Elemente derart ausgebildet und/oder angeordnet sind, dass sich in den Seitenflanken eine Vorspannung befindet, die eine Tendenz aufweist, dass die Seitenflanken sich nach außen wölben.

Je nach gewünschtem Einsatzfall der Sämaschine bei entsprechenden Einsatzbedingungen lassen sich durch vorteilhafte Ausgestaltungen entsprechend der Merkmale der Ansprüche 9 bis 12 erreichen.

Ein besonders vorteilhaftes Einfangen, insbesondere von schwierig abzulegendem Saatgut, lässt sich durch die Merkmale der Ansprüche 11 und 12 erreichen.

Um sicher zu stellen, dass die als Saatandruckrollen ausgebildete Walkrollen in jedem Falle die Saatkörner sicher abfangen, in die Saatfurche einbetten und gleichzeitig eine ausreichende Walkung zur Selbstreinigung der Rollen erzielt wird, ist vorgesehen, dass die Walkrolle in unbelastetem Zustand die Unterkante des Säschares, welche die Säfurche zieht, nach unten, um mindestens 5 mm, vorzugsweise 15 mm bis 25 mm überragen.

Eine vorteilhafte Zuordnung von Säschar und Walkrolle lässt sich dadurch erreichen, dass Teile des die Säfurche ziehenden Säschares im die Säfurche ziehenden Bereich in Seitenansicht gesehen das scheibenartige Elementes der Walkrolle etwas überlappen, so dass sich die Walkrolle mit ihrem vorderen Bereich zwischen den die Säfurche ziehenden Teilen befindet.

Um eine sicheres Abfangen des in Richtung der Walkrolle geschleuderten Saatkornes und ein vorteilhaftes Einbetten des Saatkornes in die Säfurche zu erreichen, ist vorgesehen, dass durch das nach außen Wölben der Seitenflanken durch das Aufstehen der Rolle auf der Bodenoberfläche die Außenseiten der Seitenflanken zumindest annähernd bis an die von dem Säschar gebildete breiteste Kontur heranreichen.

Eine vorteilhafte Anordnung der Walkrolle bei einem als Doppelscheibenschar ausgebildeten Säschar lässt sich dadurch erreichen, dass das Säschar als Doppelscheibenschar ausgebildet ist und die Saatandruckrolle mit ihrem vorderen Bereich zwischen die V-förmig angestellten Scheiben des Doppelscheibenschares ragt.

Eine vorteilhafte Zuführung des Saatkornes in Richtung der Walkrolle wird dadurch erreicht, dass das Säschar einen nach hinten unten gekrümmten Saatgutführungskanal aufweist, der in Richtung der Keilspitze des von der Säfurche und dem vorderen Aufstandsbereich der Walkrolle gebildeten keilförmigen Bereich gerichtet ist, so dass das pneumatisch geförderte Saatkorn in diese Richtung geschleudert wird.

Vorteilhafte Ausbildung des Materiales sind in den Ansprüchen 25-27 wiedergegeben.

Eine vorteilhafte Tiefenführung des Säschares lässt sich durch die Merkmale der Ansprüche 29 oder 30 erreichen.

Um die gewünschte Walkarbeit der Walkrolle zu erreichen, ist vorgesehen, dass die Breite der Luftfläche zwischen 10 und 30 mm, vorzugsweise 15 mm und die Höhe der Seitenflanken zwischen 40 und 100 mm vorzugsweise 70 mm beträgt.

Eine Unterstützung der guten Walkarbeit und Selbstreinigung mit der Gewährleistung eines sicheres Eigenantriebes wird dadurch erreicht, dass der Durchmesser zwischen 200 und 400 mm, vorzugsweise etwa 300 mm beträgt.

Weitere Einzelheiten der Erfindung sind den übrigen Unteransprüchen, der Beispielsbeschreibung und den Zeichnungen zu entnehmen. Hierbei zeigen
- Fig. 1: die als Einzelkornsämaschine ausgebildete Sämaschine in Prinzipdarstellung, in Seitenansicht, wobei lediglich der Vorratsbehälter mit der Verteileinrichtung und einem Säschar dargestellt ist,
- Fig. 2: die Schareinheit der Sämaschine in Seitenansicht und vergrößertem Maßstab,
- Fig. 3: die Schareinheit in Seitenansicht mit abgenommenen Furchenrädern und Scharscheiben,
- Fig. 4: die Schareinheit in der Ansicht A-A,
- Fig. 5: die untere Hälfte des reifenförmigen Elementes der Walkrolle im Schnitt,
- Fig. 6: das nach außen wölben der Seitenflanken der reifenförmigen Elemente der Walkrolle im Schnitt beim Abrollen auf der Bodenoberfläche und einbetten des Saatgutes im Boden,
- Fig. 7: eine weitere Anordnung des reifenartigen Elementes auf der Felge einer Walkrolle,
- Fig. 8: eine weitere Anordnung des reifenartigen Elementes auf der Felge einer Walkrolle,
- Fig. 9: eine weitere Anordnung des reifenartigen Elementes auf der Felge einer Walkrolle,
- Fig. 10: ein weiterer Querschnitt des reifenartigen Elementes,
- Fig. 11: ein weiterer Querschnitt des reifenartigen Elementes,
- Fig. 12: ein weiterer Querschnitt des reifenartigen Elementes,
- Fig. 13: ein weiterer Querschnitt des reifenartigen Elementes,
- Fig. 14: ein weiterer Querschnitt des reifenartigen Elementes und
- Fig. 15: ein weiterer Querschnitt des reifenartigen Elementes.

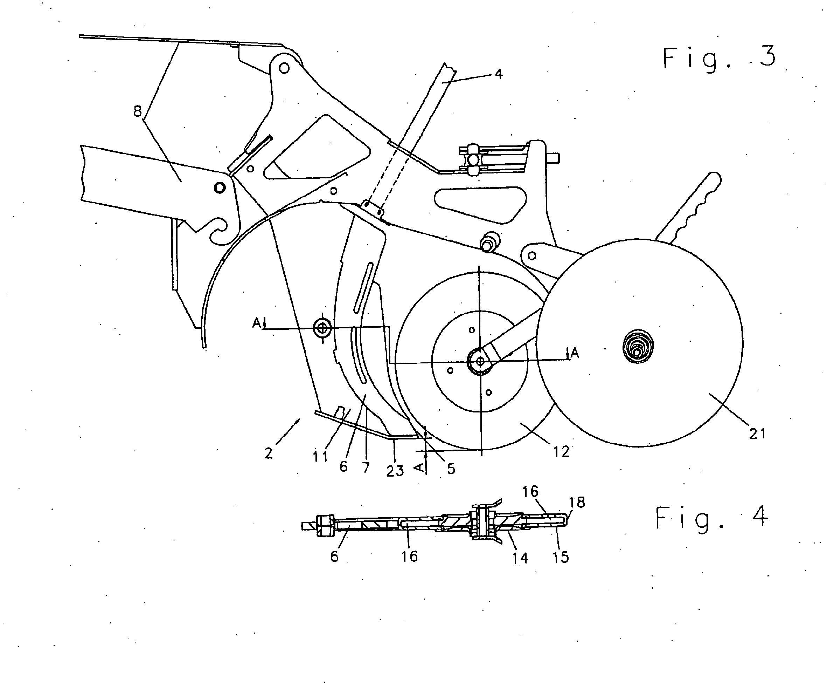

Die Sämaschine weist die Säfurchen 1 ziehende Säschare 2 auf. Diese Säschare 2 sind über parallelogrammartige Halterungen 3 an einem Querträger 4 angeordnet. Mehrere Säschare sind beabstandet und quer zur Fahrtrichtung 5 nebeneinander angeordnet. Die Säschare 2 weisen einen Saatgutführungskanal 6 mit einer im unteren Bereich nach hinten-unten gerichteten Krümmung 7 auf, die in Richtung der Säfurche 1 schräg nach unten gerichtet ist. Über eine Saatgutleitung 8 wird diesen Säscharen 2 mittels Druckluft das Saatgut 9 von einer Vereinzelungsverteileinrichtung 10 zugeleitet. Hinter den die Säfurchen bildenden Elementen 11 der Säschare 2 ist eine mit diesen fluchtend angeordnete und drehbar gelagerten Saatandruckrolle 12 vorgesehen. Diese Saatandruckrolle 12 ist jeweils als Walkrolle ausgebildet und überragt das die Säfurche 1 bildenden Elemente 11 des Schares 2 in ausgehobener Stellung nach unten, wie insbesondere die Fig. 3 zeigt. Die Saatandruckrollen 12 sind beim Andrücken des Saatgutes 9 in ihrem Aufstandbereich 13 zusammendrückbar, das bedeutet, wenn die Säschare 2 im Einsatz sind, eine Säfurche 1 ziehen und die Rollen 12 gegen den Boden gedrückt werden, werden die Walkrollen 12 in ihrem Aufstandsbereich 13 zusammengedrückt. Die Saatgutandruckrollen 12 bestehen aus einer Felge 14 und auf dieser aus einem elastischen Material bestehenden reifenartigen Element 15. Das reifenartige Element 15 weist zumindest einen umlaufenden Hohlraum 16 mit zumindest zwei beabstandet zueinander angeordneten Seitenflanken 17 und zumindest ein die Lauffläche 18 bildenden Quersteg 19 auf.

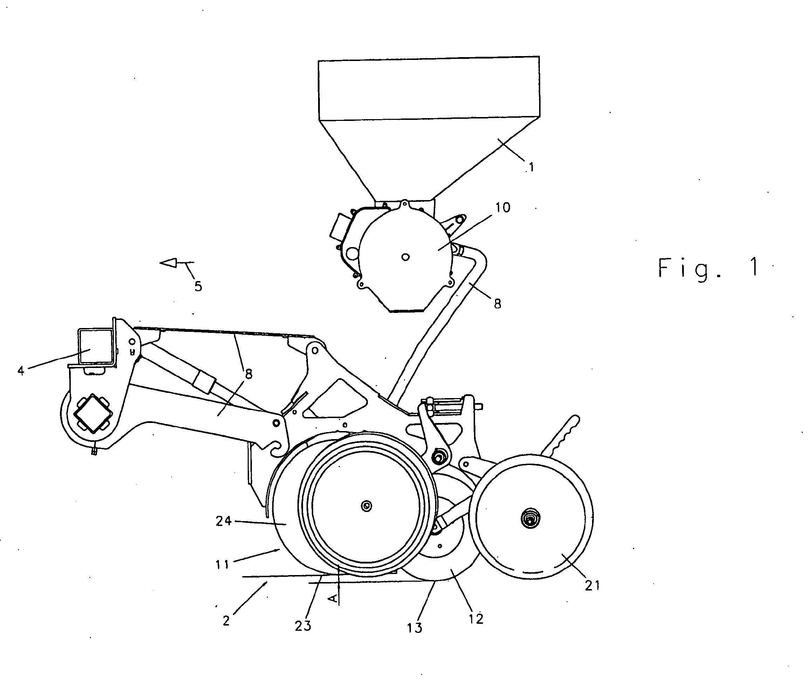

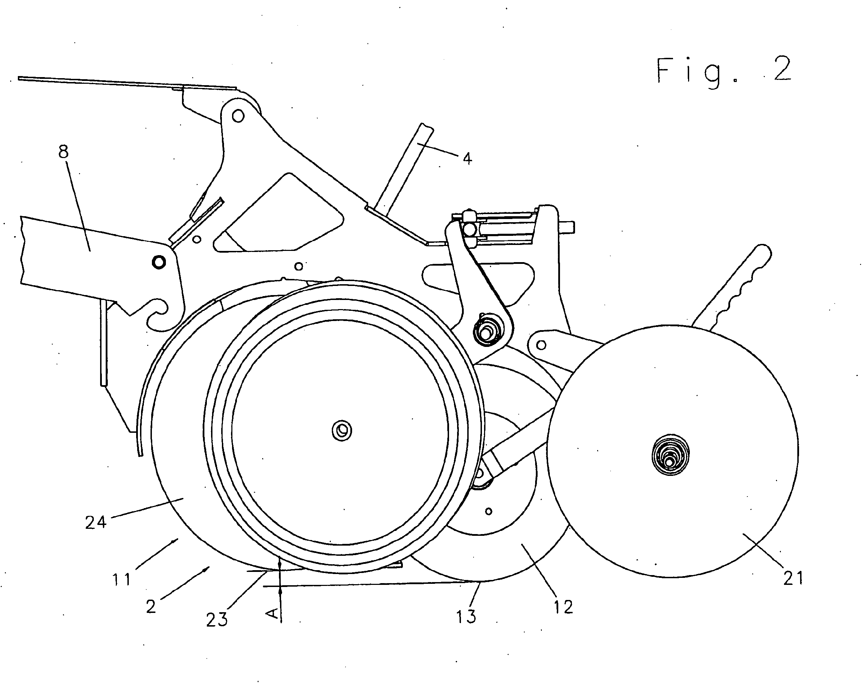

Im Ausführungsbeispiel nach Fig. 1 bis 6 weist das reifenartige Element 15 einen U-förmigen Querschnitt auf, wobei der die beiden Seitenflanken 17 verbindende Quersteg 19 die Lauffläche 18 der Rolle 12 bildet. Die Seitenflanken 17 sind derart ausgebildet bzw. auf der Felge 14 angeordnet, dass sie bei einem Druck auf ihre Lauffläche 18 bzw. ihrem Aufstandsbereich 13 auf den Boden sich nach außen wölben, so dass sie als nach außen wölbbare Seitenflanken ausgebildet sind.

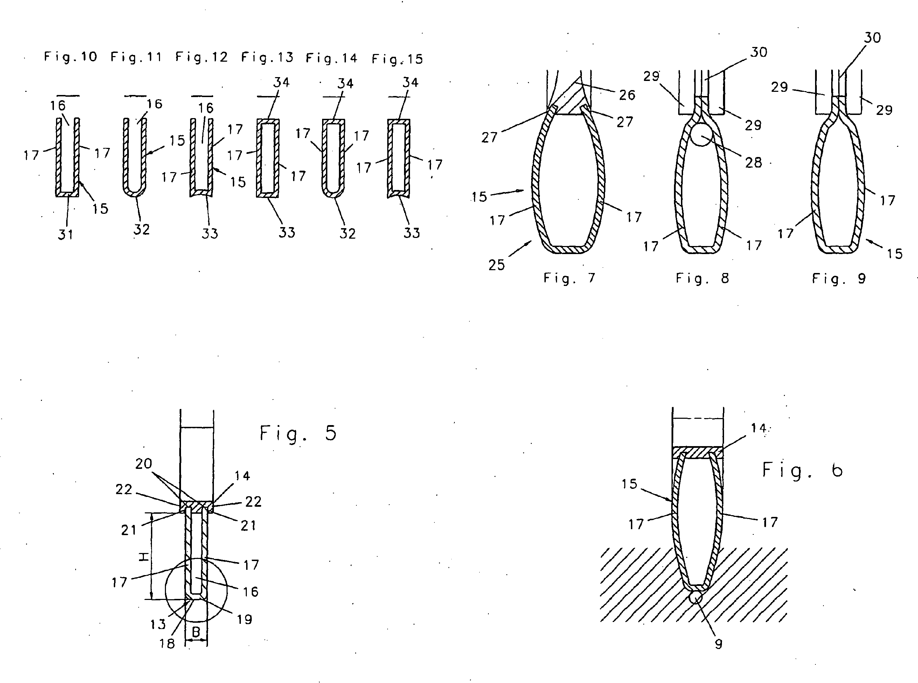

Die Seitenflanken 17 sind also derart ausgebildet, dass sie beim Druck auf die Lauffläche 18 des reifenartigen Elementes 15 sich nach außen wölben wie Fig. 6 zeigt.

Die inneren Bereiche 20 der Seitenflanken 17 des reifenartigen Elementes 15 der Walkrolle 12 sind auf der Felge 14 in Nuten 21 angeordnet und mittels der Klemmscheiben 22 von beiden Seiten festgeklemmt. Durch den U-förmigen Querschnitt des reifenartigen Elementes 15 der Walkrolle 12 wird der ringförmige Hohlraum 16 ausgebildet.

Die Walkrolle 12 überragt im unbelasteten Zustand die Unterkante 23 des Säschare 2, welche die Säfurche 1 ziehen um mindestens 5 mm vorzugsweise 15 bis 25 mm nach unten. Dieses überragende Maß ist mit A bezeichnet. Teile des die Säfurche 2 ziehenden Säschares 2 überlappen in Seitenansicht gesehen das reifenförmige Element 15 der Walkrolle 12 nach hinten, so dass sich die Walkrolle 12 in ihrem vorderen Bereich in den die Säfurche 1 ziehenden Teilen, die von den V-förmig, in Draufsicht gesehen, angeordneten Scharscheiben 24 gebildet werden, befindet.

Durch das nach außen Wölben der Seitenflanke 17 durch das Aufstehen auf dem Boden reichen die Außenseiten der Seitenflanken zumindest annähernd bis an die von dem Säschar 1 gebildete breiteste Kontur heran.

Bei dem als Doppelscheibenschar ausbildeten Säschar 2 ragt die Saatandruckrolle 12 mit ihrem vorderen Bereich zwischen die V-förmig angestellten Scheiben 24 des Doppelscheibenschares.

Wie bereits vor erwähnt, weist das Säschar 2 einen nach hinten-unten gekrümmten Saatgutführungskanal 6 auf, der in Richtung der Keilspitze des von der Säfurche 1 und dem vorderen Aufstandsbereich 13 der Walkrolle 12 gebildeten keilförmigen Bereich gerichtet ist, so dass das pneumatisch geförderte Saatkorn 4 in diese Richtung geschleudert wird.

Durch diese Ausbildung kann die Walkrolle 12 zusammen mit der Säfurche 1 das Saatkorn 4 abfangen und die Walkrolle 12 das Saatgut in den Boden der Säfurche 1 drücken, so dass eine gute Saatguteinbettung der Saatkörner in gleichmäßigem Abständen erreicht wird. Das elastische Material, aus dem die Walkrolle 12 bzw. reifenartige Elemente 15 der Walkrolle 12 hergestellt ist, besteht aus Polyrethan oder aus Gummi, wie beispielsweise Naturkautschuk. Versuche haben gezeigt, dass das elastische Material eine Sharehärte von 60A bis 95A, vorzugsweise etwa 70A aufweisen sollte. Eine derartige Elastizität ist besonders vorteilhaft.

Um die gute Walkarbeit, eine Selbstreinigung der Rolle 12 und das Abfangen des Saatkornes 9 durch die Rolle 12 zu erreichen, hat sich herausgestellt, dass ein Breiten-Höhenverhältnis von Lauffläche 18 zu Seitenflanke 17 von mindestens 1:2, vorzugsweise 1:>3 vorhanden sein sollte. Hierdurch wird erst eine ausreichende Walkarbeit zur Selbstreinigung sowie ein sicherer Selbstantrieb der Walkrolle 12 beim Abrollen auf dem Boden erreicht.

Hierbei sollte die Breite B der Lauffläche 18 zwischen 10 und 30 mm, vorzugsweise 15 mm und die Höhe H der Seitenflanken 17 zwischen 40 und 100 mm, vorzugsweise 70 mm betragen. Hierbei sollte dann der Durchmesser D zwischen 200 und 400 mm, vorzugsweise bei etwa 300 mm für die Walkrolle 12 liegen.

### Die Funktionsweise ist folgende:

Dadurch, dass die Aufstandsfläche 13 der Walkrolle 12 die Unterkante 23 des Säschares 2, welche die Säfurche 1 schafft, im vorbeschriebenen Maße A nach unten überragt, wird zusätzlich durch die elastische Ausbildung durch die sehr hohen Seitenflanken 17 im Vergleich zu der Breite B der Laufflächen 18 ein hervorragende Walkarbeit erreicht. Hierdurch ergibt sich auch ein äußerst sicherer und gleichmäßiger Antrieb und Rotation der Walkrolle 12 durch das Abrollen auf dem Boden. Die Walkrolle 12 ist aufgrund ihrer elastischen und walkenden Arbeit, man kann sogar sagen, ihrer "schwabbeligen" Ausführung in der Lage, durch ihre einfache Ausgestaltung in bisher nicht gekannter Weise eine gleichmäßige Saatguteinbettung bei einer Selbstreinigung der Walze zu erzielen. Es wird also durch diese erfindungsgemäßen Idee erstmals mittels einer zunächst als untauglich erscheinenden Rolle 12 in völlig überraschender Weise eine äußerst gleichmäßige Einbettung des Saatgutes in den gewünschten Abstand zueinander erreicht. Weiterhin ergibt sich eine gleichmäßige Drehung der Rolle 12 mit Eigenantrieb durch das Abrollen auf den Boden. Außerdem eignen sie sich sehr gut zum Abfangen des in Richtung des Bodens der Säfurche 1 der Rolle 12 geschleuderten Saatgutes.

Bei dem Ausführungsbeispiel nach Fig. 7, wobei nur die untere Hälfte der Walkrolle 25 im Querschnitt dargestellt ist, zeigt des Anordnung der reifenartigen Elementes 15 auf einer Felge 26 in Nuten 27, wobei die Nuten 27 so ausgebildet sind, und zwar in dem sie schräg nach außen weisen, dass sie den Seitenflanken 29 eine Tendenz zum nach Außenwölben geben. Ohne diese Anordnung der Nuten 27 in der Felge 26 würden die Seitenflanken 17 reifenartigen Elementes 15 parallel ausgerichtet sein, wie beispielsweise dies die Fig. 5 zeigt.

Gemäß Fig. 8 ist das nach Außenwölben der Seitenflanken 17 des reifenartigen Elementes 15, wobei die Seitenflanken 17 an sich in Ruhezustand parallel zueinander ausgerichtet sind, durch das Einlegen eines Ringes 28 in den Hohlraum 16 des reifenartigen Elementes 15 und ein Zusammenpressen der inneren Enden der Seitenflanken 17 durch umlaufende Stege 29 der Felge 30 erreicht, wie dies Fig. 8 zeigt.

Gemäß Fig. 9 wird ein nach Außenwölben der Seitenflanken 17 durch eine in den Seitenflanken 17 bzw. des durch die Form des Querschnittes des reifenartigen Elementes 15 das nach Außenwölben der Seitenflanken 17 erreicht. Die inneren Bereiche der Seitenflanken 17 werden durch Außenstege 29 der Felge 30 zusammengedrückt.

Weitere mögliche Querschnitte des reifenartigen Elementes 15 sind in den Fig. 10 bis 15 dargestellt.

Die Fig. 10 zeigt einen Querschnitt U-förmiges, reifenförmiges Element 15 mit den Seitenflanken 17 und den eine geradlinige Lauffläche 31 aufweisenden reifenartigen Element 15.

Die Fig. 11 zeigt ein reifenartiges Element 15 im Querschnitt, wobei das reifenartige Element 15 ein abgerundete Lauffläche 32 aufweist.

Fig. 12 zeigt einen weiteren Querschnitt des reifenartigen Elementes 15, wobei die Lauffläche 33 eine nach innen gewölbte Krümmung aufweist, also konkav ausgebildet ist. Im Prinzip weist das reifenartige Element 15 einen W-förmigen Querschnitt auf.

Alle bisher geschriebenen reifenartigen Elemente sind im Querschnitt prinzipiell U-förmig ausgebildet, d.h. dass sie ein in Richtung der Felge offenen Hohlraum 16 aufweisen.

Die Querschnitte nach den Fig. 13 bis 15 unterscheiden sich von den Querschnitten der Fig. 10 bis 12 im wesentlichen dadurch, dass die Seitenflanken 17 des scheibenartigen bzw. reifenartigen Elementes der Walkrolle 12 durch einen inneren Quersteg 34 miteinander verbunden ist. Dieser Quersteg 34 kann wie in den Fig. 13 bis 15 gezeigt, direkt die inneren Enden der Seitenflanken 17 miteinander verbinden, es ist jedoch auch möglich, dass die Seitenflanken 17 den inneren Quersteg 34 nach innen überragen, d.h. dass der innere Quersteg etwas in radialer Richtung nach außen versetzt angeordnet ist, so dass die Seitenflanken 17 den Quersteg 34 nach innen überragt.

## Patentansprüche

1. Sämaschine mit Säfurchen ziehenden Säscharen und hinter den Säscharen mit diesen fluchtend angeordneten und drehbar gelagerten Saatgutandruckrollen, wobei die Saatgutandruckrollen (12) als Walkrollen ausgebildet sind und das Schar (2) in seiner angehobenen Stellung nach unten überragen, **dadurch gekennzeichnet, dass** beim Andrücken des Saatgutes die Saatandruckrollen (12) in ihrem Aufstandsbereich zusammendrückbar sind, dass die Saatgutandruckrollen (12) aus einer Felge (14) und auf dieser aus einem elastischen Material bestehendes reifenartiges Element (15) bestehen, dass das reifenartige Element (15) zumindest einen umlaufenden Hohlraum (16) mit zumindest zwei beabstandet zueinander angeordneten Seitenflanken (17) und zumindest einem die Lauffläche (18) bildenden Quersteg (19) besteht, dass das Breiten- Höhenverhältnis von Lauffläche (18) zu Seitenflanke (17) des reifenartigen Elementes (15) mindestens 1: 2, vorzugsweise 1: >3 beträgt, dass die Seitenflanken (17) derart ausgebildet sind, dass sie bei einem Druck auf die Lauffläche des reifenartigen Elementes (15) sich nach außen wölben.

2. Sämaschine nach Anspruch 1, **dadurch gekennzeichnet, dass** das reifenartige Element (15) eine U-förmigen Querschnitt aufweist, wobei der die beiden Seitenflanken (17) verbindende Quersteg (19) die Lauffläche (18) der Rolle bildet.

3. Sämaschine nach Anspruch 1, **dadurch gekennzeichnet, dass** die Seitenflanken (17) als nach außen wölbbare Seitenflanken ausgebildet sind.

4. Sämaschine nach Anspruch 1, **dadurch gekennzeichnet, dass** die reifenartigen Elemente (15) derart auf den Felgen (14,26,30) angeordnet sind, dass bei einem auftreten der Kraft auf die Lauffläche (18) in Achsrichtung sich die Seitenflanken (17) nach außen wölben.

5. Sämaschine nach einem oder mehreren der vorstehenden Ansprüche, **dadurch gekennzeichnet, dass** die Seitenflanken (17) derart ausgebildet und oder auf den Felgen (14,26,30) derart angeordnet sind, dass sie eine Tendenz zum nach außen wölben aufweisen.

6. Sämaschine nach Anspruch 1, **dadurch gekennzeichnet, dass** die Seitenflanken (17) im Querschnitt gesehen nach außen gewölbt ausgebildet sind.

7. Sämaschine nach einem oder mehreren der vorstehenden Ansprüche, **dadurch gekennzeichnet, dass** die reifenartigen Elemente (15) derart ausgebildet und/oder angeordnet sind, dass sich in den Seitenflanken (17) eine Vorspannung befindet, die eine Tendenz aufweist, dass die Seitenflanken (17) sich nach außen wölben.

8. Sämaschine nach einem oder mehreren der vorstehenden Ansprüche, **dadurch gekennzeichnet, dass** das reifenartige Element (15) eine abgerundete Lauffläche (32) aufweist.

9. Sämaschine nach Anspruch 1, **dadurch gekennzeichnet, dass** die Laufflächen (31) der Reifen (15) geradlinig ausgebildet ist.

10. Sämaschine nach einem oder mehreren der vorstehenden Ansprüche 3 bis 9, wenn sie nicht abhängig von Anspruch 2 sind, **dadurch gekennzeichnet, dass** das reifenartige Element (15) einen W-förmigen Querschnitt (33) aufweist.

11. Sämaschine nach Anspruch 1, **dadurch gekennzeichnet, dass** die Lauffläche (33) des reifenartigen Elementes (15) eine nach innen gewölbte Krümmung aufweist, also konkav ausgebildet ist.

12. Sämaschine nach Anspruch 1, **dadurch gekennzeichnet, dass** das reifenartige Element eine geschlossenen aufweisenden Querschnitt aufweist, der einen umlaufenden Hohlraum (16) aufweist.

13. Sämaschine nach Anspruch 1, **dadurch gekennzeichnet, dass** die beiden Seitenflanken (17) auf dem der Nabe zugewandten Seite mittels eines inneren Quersteges (34) miteinander verbunden sind.

14. Sämaschine nach Anspruch 1, **dadurch gekennzeichnet, dass** die Seitenflanken (17) der reifenartigen Elemente (15) der Walkrolle (5) scheibenförmig ausgebildet sind.

15. Sämaschine nach einem oder mehreren der vorstehenden Ansprüche, **dadurch gekennzeichnet, dass** die Seitenflanken (17) derart ausgebildet sind, dass die Seitenflanken (17) in ihrem Querschnitt so ausgeformt sind, dass sie beim zusammendrücken die Neigung haben sich nach außen zu wölben.

16. Sämaschine nach Anspruch 1, **dadurch gekennzeichnet, dass** die inneren Bereiche der Seitenflanken (17) der reifenartigen Elemente (15) der Walkrolle (5) auf der Felge (14) in Nuten (21) angeordnet und mittels Klemmscheiben (22) festgeklemmt sind.

17. Sämaschine nach einem oder mehreren der vorstehenden Ansprüche, **dadurch gekennzeichnet, dass** durch den U-förmigen Querschnitt des reifenartigen Elementes (15) der Walkrolle (5) ein ringförmiger Hohlraum (16) gebildet wird.

18. Sämaschine nach einem oder mehreren der vorstehenden Ansprüche, **dadurch gekennzeichnet, dass** die Saatandruckrolle (12) derart ausgebildet ist, dass beim radialen Zusammendrücken der Rolle (12) durch das Abrollen auf der Bodenoberfläche die Seitenflanken (17) sich nach außen wölben.

19. Sämaschine nach einem oder mehreren der vorstehenden Ansprüche, **dadurch gekennzeichnet, dass** die Walkrolle (12) in unbelastetem Zustand die Unterkante (23) des Säschares (11), welche die Säfurche zieht, nach unten, um mindestens 5 mm, vorzugsweise 15 mm bis 25 mm überragt.

20. Sämaschine nach einem oder mehreren der vorstehenden Ansprüche, **dadurch gekennzeichnet, dass** Teile des die Säfurche ziehenden Säschares im die Säfurche ziehenden Bereich in Seitenansicht gesehen des scheibenartigen Elementes der Walkrolle (12) etwas überlappen, so dass sich die Walkrolle (12) mit ihrem vorderen Bereich zwischen den die Säfurche ziehenden Teile (24) befindet.

21. Sämaschine nach einem oder mehreren der vorstehenden Ansprüche, **dadurch gekennzeichnet, dass** durch das nach außen Wölben der Seitenflanken (17) durch das Aufstehen auf der Bodenoberfläche die Außenseiten der Seitenflanken (17) zumindest annähernd bis an die von dem Säschar (2,11,24) gebildete breiteste Kontur heranreichen.

22. Sämaschine nach einem oder mehreren der vorstehenden Ansprüche, **dadurch gekennzeichnet, dass** das Säschar (2) als Doppelscheibenschar (11) ausgebildet ist und die Saatandruckrolle (12) mit ihrem vorderen Bereich zwischen die V-förmig angestellten Scheiben des Doppelscheibenschares (11) ragt.

23. Sämaschine nach einem oder mehreren der vorstehenden Ansprüche, **dadurch gekennzeichnet, dass** das Säschar (2) einen nach hinten unten gekrümmten Saatgutführungskanal (6) aufweist, der in Richtung der Keilspitze des von der Säfurche und dem vorderen Aufstandsbereich der Walkrolle (12) gebildeten keilförmigen Bereich gerichtet ist, so dass das pneumatisch geförderte Saatkorn in diese Richtung geschleudert wird.

24. Sämaschine nach einem oder mehreren der vorstehenden Ansprüche, **dadurch gekennzeichnet, dass** das elastische Material aus Polyurethan besteht.

25. Sämaschine nach Anspruch 1, **dadurch gekennzeichnet, dass** das elastische Material aus Gummi, wie Naturkautschuk besteht.

26. Sämaschine nach einem oder mehreren der vorstehenden Ansprüche, **dadurch gekennzeichnet, dass** das elastische Material eine Shorehärte von 60A bis 95A, vorzugsweise etwa 70 A aufweist.

27. Sämaschine nach einem oder mehreren der vorstehenden Ansprüche, **dadurch gekennzeichnet, dass** die Saatandruckrolle (12) mittels einer gelenkig und vorzugsweise federbelasteten Schwinge am Scharkörper des Säschares (2) aufgehängt ist.

28. Sämaschine nach Anspruch 1, **dadurch gekennzeichnet, dass** hinter dem Säschar (2) und der Saatandruckrolle (12) Tiefenführungsrollen (21) angeordnet sind.

29. Sämaschine nach Anspruch 1, **dadurch gekennzeichnet, dass** seitlich der Scheibenscheibensäschare (2) Tiefenführungsrollen angeordnet sind, die in der Höhe in Bezug auf die Säschare einstellbar sind.

30. Sämaschine nach Anspruch 1, **dadurch gekennzeichnet, dass** das Säschar (2) als Schleppschar ausgebildet ist.

31. Sämaschine nach Anspruch 30, **dadurch gekennzeichnet, dass** die Breite (B) der Luftfläche (18) zwischen 10 und 30 mm, vorzugsweise 15 mm und die Höhe (H) der Seitenflanken (17) zwischen 40 und 100 mm vorzugsweise 70 mm beträgt.

32. Sämaschine nach einem oder mehreren der vorstehenden Ansprüche, **dadurch gekennzeichnet, dass** der Durchmesser (D) der Walkrolle (12) zwischen 200 und 400 mm, vorzugsweise etwa 300 mm beträgt.

## Claims

1. Planter comprising seed coulters which plough seed furrows and, behind the seed coulters, rotatably mounted firming wheels arranged in alignment with the said seed coulters, wherein the firming wheels (12) are configured as flexi-rollers and project downwards beyond the coulter (2) in its raised setting, **characterized in that**, in the pressing of the seed, the firming wheels (12) are compressible in their contact region, **in that** the firming wheels (12) comprise a rim (14) and, on this, a tyre-like element (15) consisting of an elastic material, **in that** the tyre-like element (15) comprises at least one circumferential cavity (16), having at least two spaced-apart side flanks (17) and at least one crosspiece (19) forming the tread (18), **in that** the width-height ratio of tread (18) to side flank (17) of the tyre-like element (15) is at least 1:2, preferably 1:>3, **in that** the side flanks (17) are configured such that they bow outwards when a pressure is applied to the tread of the tyre-like element (15).

2. Planter according to Claim 1, **characterized in that** the tyre-like element (15) has a U-shaped cross section, wherein the crosspiece (19) connecting the two side flanks (17) forms the tread (18) of the roller.

3. Planter according to Claim 1, **characterized in that** the side flanks (17) are configured as outwardly bowable side flanks.

4. Planter according to Claim 1, **characterized in that** the tyre-like elements (15) are arranged on the rims (14, 26, 30) such that the side flanks (17) bow outwards when a force arises on the tread (18) in the axial direction.

5. Planter according to one or more of the preceding claims, **characterized in that** the side flanks (17) are configured in such a way and/or are arranged on the rims (14, 26, 30) in such a way that they have a tendency to bow outwards.

6. Planter according to Claim 1, **characterized in that** the side flanks (17) are configured such that, viewed in cross section, they are bowed outwards.

7. Planter according to one or more of the preceding claims, **characterized in that** the tyre-like elements (15) are configured and/or arranged such that a pretension is present in the side flanks (17), which pretension tends to make the side flanks (17) bow outwards.

8. Planter according to one or more of the preceding claims, **characterized in that** the tyre-like element (15) has a rounded tread (32).

9. Planter according to Claim 1, **characterized in that** the treads (31) of the tyres (15) is of rectilinear configuration.

10. Planter according to one or more of the preceding Claims 3 to 9, if they are not dependent on Claim 2, **characterized in that** the tyre-like element (15) has a W-shaped cross section (33).

11. Planter according to Claim 1, **characterized in that** the tread (33) of the tyre-like element (15) has an inwardly bowed curvature, i.e. is of concave configuration.

12. Planter according to Claim 1, **characterized in that** the tyre-like element has a closed cross section comprising a circumferential cavity (16).

13. Planter according to Claim 1, **characterized in that** the two side flanks (17), on the side facing the hub, are connected to each other by means of an inner crosspiece (34).

14. Planter according to Claim 1, **characterized in that** the side flanks (17) of the tyre-like elements (15) of the flexi-roller (5) are of disc-shaped configuration.

15. Planter according to one or more of the preceding claims, **characterized in that** the side flanks (17) are configured such that the side flanks (17) are shaped in their cross section such that they are inclined to bow outwards when compressed.

16. Planter according to Claim 1, **characterized in that** the inner regions of the side flanks (17) of the tyre-like elements (15) of the flexi-roller (5) are arranged on the rim (14) in grooves (21) and are clamped in place by means of clamping discs (22).

17. Planter according to one or more of the preceding claims, **characterized in that**, as a result of the U-shaped cross section of the tyre-like element (15) of the flexi-roller (5), an annular cavity (16) is formed.

18. Planter according to one or more of the preceding claims, **characterized in that** the firming wheel (12) is configured such that the side flanks (17) bow outwards when the roller (12) is radially compressed by the rolling on the ground surface.

19. Planter according to one or more of the preceding claims, **characterized in that** the flexi-roller (12), in the unloaded state, projects downwards beyond the bottom edge (23) of the seed coulter (11) ploughing the seed furrow by at least 5 mm, preferably 15 mm to 25 mm.

20. Planter according to one or more of the preceding claims, **characterized in that**, viewed in side view, parts of the seed coulter which ploughs the seed furrow, in the region ploughing the seed furrow, somewhat overlap the disc-like element of the flexi-roller (12), so that the flexi-roller (12) is situated with its front region between the parts (24) ploughing the seed furrow.

21. Planter according to one or more of the preceding claims, **characterized in that**, as a result of the outward bowing of the side flanks (17) through the contact with the ground surface, the outer sides of the side flanks (17) reach at least approximately up to the widest contour formed by the seed coulter (2, 11, 24).

22. Planter according to one or more of the preceding claims, **characterized in that** the seed coulter (2) is configured as a double-disc coulter (11) and the firming wheel (12) projects with its front region between the discs of the double-disc coulter (11), which discs are set in a V-shape.

23. Planter according to one or more of the preceding claims, **characterized in that** the seed coulter (2) has a seed guide channel (6) which is curved rearwards and downwards and which is directed in the direction of the wedge tip of the wedge-shaped region formed by the seed furrow and the front contact region of the flexi-roller (12), so that the pneumatically conveyed seed grain is hurled in this direction.

24. Planter according to one or more of the preceding claims, **characterized in that** the elastic material consists of polyurethane.

25. Planter according to Claim 1, **characterized in that** the elastic material consists of rubber, such as natural rubber.

26. Planter according to one or more of the preceding claims, **characterized in that** the elastic material has a Shore hardness of 60A to 95A, preferably around 70 A.

27. Planter according to one or more of the preceding claims, **characterized in that** the firming wheel (12) is suspended from the coulter body of the seed coulter (2) by means of an articulated and preferably spring-loaded rocker arm.

28. Planter according to Claim 1, **characterized in that** depth guide rollers (21) are arranged behind the seed coulter (2) and the firming wheel (12).

29. Planter according to Claim 1, **characterized in that** to the side of the disc-disc seed coulters (2) are arranged depth guide rollers which are adjustable in height in relation to the seed coulters.

30. Planter according to Claim 1, **characterized in that** the seed coulter (2) is configured as a shoe coulter.

31. Planter according to Claim 30, **characterized in that** the width (B) of the air surface (18) measures between 10 and 30 mm, preferably 15 mm, and the height (H) of the side flanks (17) measures between 40 and 100 mm, preferably 70 mm.

32. Planter according to one or more of the preceding claims, **characterized in that** the diameter (D) of the flexi-roller (12) measures between 200 and 400 mm, preferably around 300 mm.

## Revendications

1. Semoir comportant des socs tirant des sillons à semences et derrière les socs de semoir, des roues de compactage de semences, montées à rotation et alignées sur les sillons,
* les roues de compactage des semences (12) étant des roues fouleuses qui dépassent vers le bas le soc (2) en position relevée,
semoir **caractérisé en ce que**
- les roues de compactage de semences (12) sont susceptibles d'être comprimées dans leur zone d'appui lorsqu'elles compactent les semences,
- les roues de compactage de semences (12) se composent d'une jante (14) et d'un élément (15) en forme de pneumatique, en un matériau élastique,
- l'élément (15) en forme de pneumatique se compose d'une cavité périphérique (16) ayant au moins deux flancs (17) écartés l'un de l'autre et une surface transversale (19) constituant la surface de roulement (18),
- le rapport largeur/hauteur de la surface de roulement (18) et du flanc (17) de l'élément en forme de pneumatique (15) étant au moins égal à 1 : 2 et de préférence 1 >3,
- les flancs (17) sont réalisés de façon à se bomber vers l'extérieur sous l'effet d'une pression exercée sur la surface de roulement de l'élément en forme de pneumatique (15).

2. Semoir selon la revendication 1,
**caractérisé en ce que**
l'élément (15) de type pneumatique a une section en forme de U, et la surface transversale (19) reliant les deux flancs (17) constitue la surface de roulement (18) de la roue.

3. Semoir selon la revendication 1,
**caractérisé en ce que**
les flancs (17) sont réalisés avec une forme bombée vers l'extérieur.

4. Semoir selon la revendication 1,
**caractérisé en ce que**
les éléments de type pneumatique (15) sont installés sur les jantes (14, 26, 30) de façon que les flancs (17) se bombent vers l'extérieur dans la direction axiale sous l'effet d'une force exercée sur la surface de roulement (18).

5. Semoir selon l'une quelconque des revendications précédentes, **caractérisé en ce que**
les flancs (17) sont réalisés et/ou installés sur les jantes (14, 26, 30) pour avoir une tendance à se bomber vers l'extérieur.

6. Semoir selon la revendication 1,
**caractérisé en ce qu'**
en section, les flancs (17) ont une forme bombée vers l'extérieur.

7. Semoir selon l'une quelconque des revendications précédentes,
**caractérisé en ce que**
les éléments de type pneumatique (15) sont réalisés et/ou installés pour que les flancs (17) présentent une précontrainte avec une tendance à bomber les flancs (17) vers l'extérieur.

8. Semoir selon l'une quelconque des revendications précédentes,
**caractérisé en ce que**
l'élément de type pneumatique (15) a une surface de roulement (32) arrondie.

9. Semoir selon la revendication 1,
**caractérisé en ce que**
la surface de roulement (31) des pneumatiques (15) est droite.

10. Semoir selon l'une ou plusieurs des revendications précédentes indépendantes de la revendication 1,
**caractérisé en ce que**
l'élément (15) en forme de pneumatique a une section (33) en forme de W.

11. Semoir la revendication 1,
**caractérisé en ce que**
la surface de roulement (33) de l'élément de type pneumatique (15) a une courbure bombée vers l'intérieur, c'est-à-dire une forme concave.

12. Semoir selon la revendication 1,
**caractérisé en ce que**
l'élément de type pneumatique a une section fermée avec une cavité périphérique (16).

13. Semoir selon la revendication 1,
**caractérisé en ce que**
sur le côté tourné vers le moyeu, les deux flancs (17) sont reliés par une surface transversale intérieure (34).

14. Semoir selon la revendication 1,
**caractérisé en ce que**
les flancs (17) de l'élément de type pneumatique (15) de la roue fouleuse (5) sont en forme de disque.

15. Semoir selon l'une quelconque des revendications précédentes,
**caractérisé en ce que**
les flancs (17) sont réalisés de façon à avoir une section ayant tendance à se bomber vers l'extérieur sous l'effet d'une compression.

16. Semoir selon la revendication 1,
**caractérisé en ce que**
les zones intérieures des flancs (17) de l'élément de type pneumatique (15) de la roue fouleuse (5) sont installées dans des rainures (21) de la jante (14) et sont pincées par des disques de serrage (22).

17. Semoir selon l'une quelconque des revendications précédentes,
**caractérisé en ce que**
la section en forme de U de l'élément (15) de type pneumatique de la roue fouleuse (5), forme une cavité annulaire (16).

18. Semoir selon l'une quelconque des revendications précédentes,
**caractérisé en ce que**
la roue de compactage de semences (12) est réalisée pour qu'à l'état comprimé radialement en roulant sur la surface du sol, les flancs (17) se bombent vers l'extérieur.

19. Semoir selon l'une quelconque des revendications précédentes,
**caractérisé en ce que**
la roue fouleuse (12) à l'état non chargé, dépasse du bord inférieur (23) du soc de semoir (11) tirant le sillon à semences, vers le bas d'au moins 5 mm et de préférence de 15 mm à 25 mm.

20. Semoir selon l'une quelconque des revendications précédentes,
**caractérisé en ce qu'**
en vue de côté, des parties du soc de semoir tirant le sillon à semences, dépassent dans la zone tirant le sillon à semences, l'élément en forme de disque de la roue fouleuse (12) de façon que la roue fouleuse (12) se trouve avec sa zone avant entre les parties (24) tirant le sillon à semences.

21. Semoir selon l'une quelconque des revendications précédentes,
**caractérisé en ce que**
du fait de la forme bombée vers l'extérieur des flancs (17) lors de l'appui à la surface du sol, les côtés extérieurs des flancs (17) arrivent au moins sensiblement jusqu'au contour le plus large formé par le soc de semoir (2, 11, 24).

22. Semoir selon l'une quelconque des revendications précédentes,
**caractérisé en ce que**
le soc de semoir (2) est réalisé sous la forme d'un soc à double disque (11) et la roue de compactage de semence (12) arrive avec sa zone avant entre les disques disposés en V du soc à double disque (11).

23. Semoir selon l'une quelconque des revendications précédentes,
**caractérisé en ce que**
le soc de semoir (2) a un canal de guidage de semences (6) cintré vers l'arrière et le bas, et dirigé vers la pointe du cône de la zone en forme de coin constituée par le sillon à semences et la zone d'appui avant de la roue fouleuse (12) de façon que la graine de semence transportée pneumatiquement soit projetée dans cette direction.

24. Semoir selon l'une quelconque des revendications précédentes,
**caractérisé en ce que**
la matière élastique est du polyuréthane.

25. Semoir selon la revendication 1,
**caractérisé en ce que**
la matière élastique est du caoutchouc, tel que du caoutchouc naturel.

26. Semoir selon l'une quelconque des revendications précédentes,
**caractérisé en ce que**
la matière élastique a une dureté Shore comprise entre 60A et 95A et de préférence une dureté Shore de l'ordre de 70A.

27. Semoir selon l'une quelconque des revendications précédentes,
**caractérisé en ce que**
la roue de compactage de semences (12) est suspendue au corps du soc de semoir (2) par une bielle articulée de préférence chargée par un ressort.

28. Semoir selon la revendication 1,
**caractérisé en ce que**
des roues de jauge (21) sont prévues derrière le soc de semoir (2) et la roue de compactage de semences (12).

29. Semoir selon la revendication 1,
**caractérisé par**
des roues de jauge prévues sur le côté du soc de semoir en forme de disque (2), les roues de jauge étant réglables en hauteur par rapport au soc de semoir.

30. Semoir selon la revendication 1,
**caractérisé en ce que**
le soc de semoir (2) est un soc tiré.

31. Semoir selon la revendication 30,
**caractérisé en ce que**
la largeur (B) de la surface libre (18) est comprise entre 10 et 30 mm, de préférence égale à 15 mm et la hauteur (H) des flancs (17) est comprise entre 40 et 100 mm et de préférence égale à 70 mm.

32. Semoir selon l'une quelconque des revendications précédentes,
**caractérisé en ce que**
le diamètre (D) de la roue fouleuse (12) est compris entre 200 et 400 mm et de préférence égal à environ 300 mm.
